# EUROPEAN PATENT SPECIFICATION

(11) **EP 2 006 034 B1**
(45) Date of publication and mention of the grant of the patent: **08.10.2014**
(21) Application number: 08010865.7
(22) Date of filing: 16.06.2008
(51) Int. Cl.: B07B 1/20, B30B 9/12, B01D 29/11, B09B 3/00, B02C 13/14, B03B 9/06, B02C 19/22, B02C 23/16

(54) **Apparatus for selecting organic waste material suitable for being recycled**
Vorrichtung zur Auswahl von recyclingfähigem organischem Abfallmaterial
Appareil pour la sélection de matières de déchets organiques propice au recyclage

(30) Priority: 20.06.2007 IT MI20071233
(43) Date of publication of application: 24.12.2008
(73) Proprietor: Lucra 96 S.r.l., 26818 Villanova Sillaro (IT)
(72) Inventor: Toninelli, Giuliano, 26854 Pieve Fissiraga (LODI) (IT)
(74) Representative: Lecce, Giovanni

(56) References cited:
- DE-A1- 2 702 653
- DE-A1-102005 002 997
- GB-A- 2 354 720
- JP-U- 57 185 522

## Description

This invention relates to an apparatus for selecting organic waste material suitable for being recycled.

More in particular, this invention relates to an apparatus as defined above especially suitable for eliminating non-biodegradable residues or cardboard packages from masses of organic material to be recycled or from food products past their use-by date. The term "organic material" as used in this description, for example, wet waste composed of food waste, as well as frozen food products and drinks past their use-by date packaged in cardboard, such as for example fruit juices, likewise past their use-by date and not usable for feeding anymore.

Waste disposal currently represents a very important problem which often leads to serious implications correlated to environmental pollution.

An appreciable contribution to the limitation of these problems results from the so-called separate waste collection that although with some exceptions is increasingly widespread and requested in industrialised countries.

A first selection of waste is therefore made by the end consumers of the various products, according to precise subdivisions that lead to collect glass, tins, paper and cardboard and wet organic waste separately from food waste.

With particular reference to the latter type of waste, which is delivered to places where it is treated in view of its productive reuse, a considerable drawback occurs, related to the presence of foreign bodies in the mass of organic material. In view of the reuse of this material, for example to produce biogases or fertilisers, the impurities present therein must be carefully eliminated.

The presence of a great variety of foreign bodies caused by lack of attention is frequent in organic wet waste, such as for example cutlery, metal and plastic caps, rags, plastic bags, foamed polystyrene pieces and even glass tins and pieces; all this material, which many times is not immediately visible, must be removed beforehand from the organic mass and currently such operation is carried out with manual operations performed by people assigned to the task. As may be understood, it is an unpleasant work, especially due to the fumes caused by the fermentation of the organic mass and which in any case implies considerable costs. Even in the case where the organic material to be treated for reuse is composed of liquid products in packages of the Tetrapak type, such as milk and fruit juices, or thawed out products past their use-by date contained in conventional cardboard boxes, the work the persons in charge must carry out implies long time and determines an increase of costs.

GB 2354720 discloses an apparatus according to the preamble of claim 1 for removing water from ground food waste from kitchen disposal which provides for a vertical perforated tube housing a rotating screw and a movable cone-shaped weight for compressing the material in the tube. The food is driven by the screw and after raising the weight (in case biased by a spring) is scraped into a chute by paddles. Water can leave the material in the tube via the perforations in the tube. No provision is made for breaking the solid residues or foreign bodies.

DE102005002997 discloses a screw filter press in which a suspension is continuously transported by a cylindrical screw shaft with spirals along a coaxial cylindrical filter surface.

JP 57 185522 U discloses an apparatus comprising a vertical screw for transporting fluids.

The object of this invention is to obviate the drawbacks mentioned hereinabove.

More in particular, the object of this invention is to provide an apparatus for selecting organic material suitable for being recycled which should allow eliminating the foreign bodies from the organic mass in a fully automated manner.

A further object of the invention is to provide an apparatus as defined above suitable for automatically ejecting also the foreign bodies composed of cardboard packages of food products past their use-by date from the organic mass treatment zone.

Last but not least, an object of the invention is to provide an apparatus which, not requiring personnel in charge of the selection of the organic material, should allow achieving considerable production saving.

A further object of the -invention is to provide the users with an apparatus for selecting organic material suitable for ensuring high level of resistance and reliability over time, also such as to be easily and inexpensively constructed.

These and yet other objects are achieved by the apparatus for selecting organic material of this invention as claimed in claim 1. Further characteristics of the invention are recited in the dependent claims.

The construction and functional features of the apparatus for selecting organic material of this invention will be better shown in the following detailed description, wherein reference is made to the annexed drawing tables showing a preferred and non-limiting embodiment thereof, wherein:
figure 1 shows a schematic partially dissected side view of a tank for collecting the organic material to be treated associated to the selection apparatus of this invention;
Figure 2 schematically shows a front view of the collection tank of the previous figure;
figure 3 shows a schematic top view of the apparatus of this invention and of the collection tank according to figure 1;
figure 4 shows a schematic perspective front view of the apparatus of this invention without the front closing panel for highlighting the components arranged therein;
figure 5 schematically shows a perspective side view of the same apparatus.

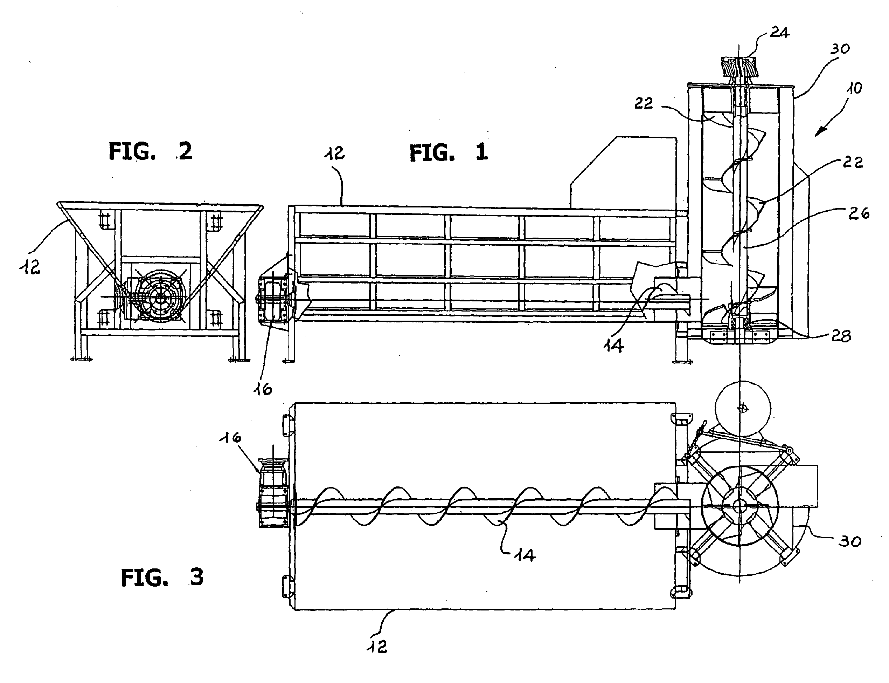

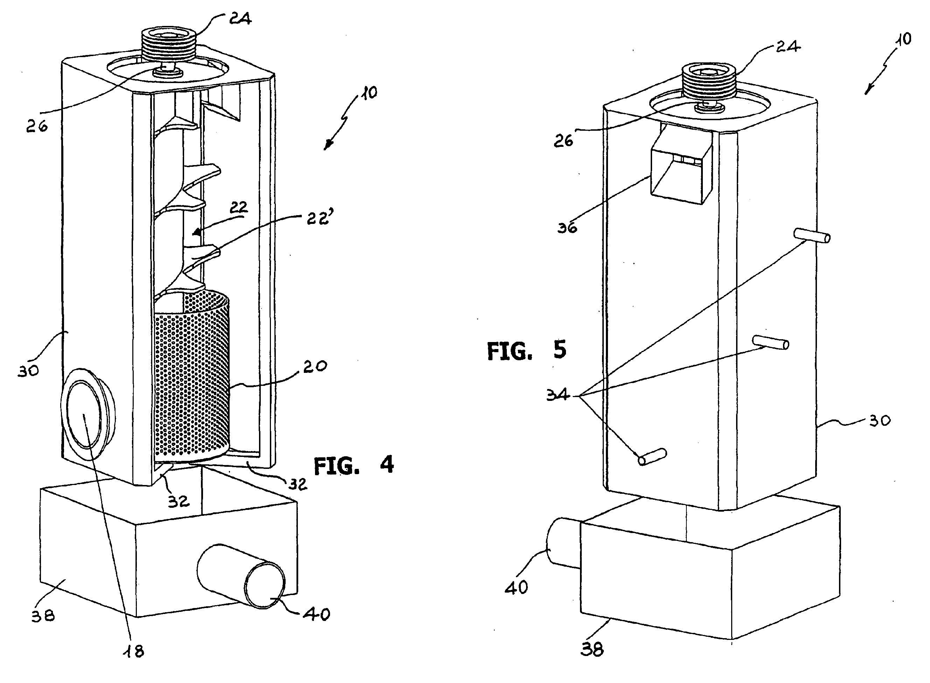

With reference to the above figures, the apparatus for selecting organic waste material to be recycled of this invention is globally indicated with 10 at figures 5 and 4, as well as figure 1 wherein it is associated to a tank 12 wherein said organic material is poured. Tank 12, known per se, is arranged adjacent device 10, with which it communicates for feeding the material to be treated therein; in particular, the material previously poured into the tank 12 is brought, through a screw 14 located into the tank itself and moved by a motor reduction unit 16, at a mouth or loading inlet 18 of the device 10. Through the loading inlet 18 the material, typically wet organic waste resulting from agro-industrial waste, enters into a substantially cylindrical body 20 which shall be described hereinafter. Apparatus 10 comprises a treatment column 30, vertically oriented relative to the tank 12, wherein a screw 22 is received, placed in rotation by a motor 24; the latter is located at the top of column 30, which by way of an example is composed of a parallelepiped sheet structure.

The screw 22, whose shaft 26 is coupled in a known manner to the motor 24, extends along the vertical axis of the column 30 substantially by the entire height of the column itself and is inserted in said substantially cylindrical body 20 arranged coaxially.

The body 20, made of metal or other suitable material, is likewise extended into the column 30 by the entire height and is preferably closed at the top end and at the bottom one by a fixed disk or carried by the shaft 26 of the screw 22; at figure 4, for a better understanding of the finding, the body 20 is represented in a partial manner and therefore extends into the column 30 only in the bottom zone.

The side surface of the cylindrical body 20 is provided with multiple small holes of suitable diameter. The screw 22 is therefore totally inserted into the cylindrical body 20 and its shaft 26 protrudes from the base of the body itself for engaging with the bottom end into a support 28 comprising one or more bearings or the like. The screw 22 defines a discontinuous helical winding which gives rise to the formation of a plurality of angularly oriented vanes or blades 22' which intervene with great strength on the material being treated.

The column 30 is open along the bottom front, wherein two or more horizontally developed side members 32, for example formed by the bending of the bearing frame of the column itself at 90°, preferably define both the anchoring of the bottom end of the shaft 26 and of the relative support 28, and the support and stabilisation surface of the cylindrical body 20; the latter is fixed in a known manner inside the column 30, so as to constantly show an opening it is provided with (not shown) aligned with the loading inlet 18.

The apparatus 10 of this invention further comprises one or more ducts 34 for the inlet of liquids into the column 30, and in particular into the cylindrical body 20, for example water, liquid state waste or solutions comprising organic slurry, having the purpose of both diluting the organic mass fed by the screw 14 of the tank 12 and of keeping the multiple small holes of the same body 20 as clean as possible. A discharge pipe 36 is obtained in the top part of the same column 30 wherefrom, as specified in detail hereinafter, the residues or foreign bodies present in the organic mass are ejected.

The column 30 rests on or surmounts a tank 38 wherein the treated organic mass collects, going down by gravity from the overlying cylindrical body 20, suitably diluted with the liquid introduced into the column itself through the ducts 34. The collection tank 38 is provided with at least one mouth 40 for the outlet or drawing of the biological liquid obtained subsequent to the treatment the organic mass has been subject to into the column 30. Such liquid, for example drawn from cask wagons, is then transferred to places where it can be used as fertiliser or subject to the action of bacteria for obtaining, with anaerobic biodigestion, biogases for motors or for the production of hot water.

In operation, the mass of organic material present in the tank 12 is progressively transferred by rotation of the screw 14, into the cylindrical body 20, through the loading inlet 18 and the corresponding opening of the same body 20.

At that point, an amount of water or other fluid is put into the column 30 suitable for diluting the organic material, so as to make it substantially liquid and thus allow the outlet thereof, both laterally and from the bottom, through the holes of the cup body 20, which acts as a filter.

The outlet of the biological liquid takes place by centrifugation, that is, by the effect of the rotation of the screw 22, arranged into the column 30, through the motor 24. The rotation of said screw takes place at a high number of revolutions, comprised between 900/1000 per minute. The mass of organic material arranged into the cup body 20 and suitably diluted is then strongly stirred in rotatory direction and made to pass through the holes of the side surface of the same body acting as filter for falling again into the underlying collection tank 38.

The vanes or blades 22' of the screw 22 also have the function of breaking Tetrapak-like cardboard packages containing liquids, or cardboard boxes containing thawed out products past their use-by date, for automatically selecting the contents to be recovered and on the contrary eliminate broken packages.

The residues or foreign bodies contained in the diluted organic mass automatically follow, by the effect of centrifugation, a compulsory path as they are led to move upwards into the column 30 by the helical orientation of the blades 22' of the screw 22 and spontaneously come out of the discharge pipe 36. Also heavier residues, such as pieces of glass, metal cutlery, caps and the like are thrown by the centrifugal force along the inside wall of the perforated cylinder 20 and, also by the effect of the above vanes or blades 22' of the screw 22, they are led towards the discharge pipe 36 wherefrom they are ejected.

The same applies to the above cardboard packages.

As can be noticed from the above, the advantages achieved by the invention are clear.

The apparatus for selecting organic waste material of this invention allows eliminating residues of various types, including cardboard packages of food products, in a totally automated manner without any manual operation by the personnel. Besides allowing the achievement of considerable saving, the apparatus of this invention avoids the persons in charge the inconvenience of operating in contact with substances sometimes stinking and it may be activated continuously with considerable advantages in terms of productivity.

Even if the invention has been described hereinbefore with particular reference to an embodiment thereof made by way of a non-limiting example, several changes and variations will appear clearly to a man skilled in the art in the light of the above description.

## Claims

1. An apparatus (10) suitable for selecting organic waste material suitable for being recycled, especially suitable for removing residues and foreign bodies from masses of wet organic waste of agro-industrial origin and for separating solid or liquid state food from the respective packages of cardboards or equivalent materials, comprising:
- a vertically oriented treatment column (30) wherein a screw (22) is rotatable by a motor (24) and totally inserted into a coaxial substantially cylindrical body (20) provided with a plurality of small holes at least along parts of the side surface thereof, said substantially cylindrical body (20) providing for an opening aligned with a loading inlet (18) for admitting the organic material to be treated,
- at least one pipe (36) in the top part of said column (30) for ejecting the residues or foreign bodies present in the organic mass subject to treatment, broken down and moved upwards by said screw (22), and
- one or more ducts (34) made along said column (30) for feeding dilution water or liquids of other type into said cylindrical body (20),
**characterised in that**
- an underlying tank (38) is communicating with said column (30) for collecting the treated organic material, and that said screw (22) is rotatable at 900-1000 rpm, defining a discontinuous helical winding.

2. The apparatus according to claim 1, **characterised in that** said motor (24) is located at the top of said column (30).

3. The apparatus according to claims 1 or 2, **characterised in that** said screw (22) is composed of a shaft (26) wherealong a plurality of blades or vanes (22') is arranged, said shaft (26) protruding at the bottom from the cylindrical body (20) for engaging into a support (28) provided with one or more bearings or the like.

4. The apparatus according to claim 3, **characterised in that** said support (28) is made at two or more horizontally developed side members (32) arranged at the base of the column (30).

5. The apparatus according to claim 1 to 4, **characterised in that** the tank (38) for collecting the treated and diluted organic material is provided with at least one mouth (40) for the outlet or drawing of the material itself.

6. The apparatus according to claims 1 to 5, **characterised in that** it is associated to a tank (12) wherein the organic material to be treated is previously poured and is then transferred through a screw (14) actuated by a motor reduction unit (16), into said loading inlet (18) of the column (30) and into said cylindrical body (20) correspondingly provided with an opening.

## Patentansprüche

1. Vorrichtung (10), die dazu geeignet ist, recyclingfähiges organisches Abfallmaterial auszuwählen, die insbesondere dazu geeignet ist, Rückstände und Fremdkörper aus Massen von organischem Nassabfall agrarindustrieller Herkunft zu entfernen und Nahrungsmittel, die in festem oder flüssigem Zustand sind, von den jeweiligen Verpackungen aus Karton oder dergleichen Stoffen zu trennen, umfassend:
- eine vertikal ausgerichtete Behandlungssäule (30), in der eine Schraube (22) von einem Motor (24) gedreht wird, wobei die Schraube vollständig in einen koaxialen, im Wesentlichen zylindrischen Körper (20) eingesetzt ist, der eine Vielzahl von kleinen Löchern mindestens längs Teile seiner Seitenfläche aufweist, wobei der im Wesentlichen zylindrische Körper (20) eine Öffnung aufweist, die auf einen Ladeeinlass (18) zum Einlassen des zu behandelnden organischen Materials ausgerichtet ist,
- mindestens ein Rohr (36) in dem oberen Teil der Säule (30) zum Ausstoßen der Rückstände oder Fremdkörper, die in der zu behandelnden organischen Masse vorhanden sind, die aufgebrochen und von der Schraube (22) nach oben bewegt werden, und
- wenigstens einen oder mehrere Kanäle (34), der oder die längs der Säule (30) zum Zuführen von Verdünnungswasser oder von anderen Arten von Flüssigkeiten in den zylindrischen Körper (20) ausgebildet ist bzw. sind,
**dadurch gekennzeichnet,**
**dass** ein darunterliegender Behälter (38) mit der Säule (30) in Verbindung steht, um das behandelte organische Material zu sammeln, und
**dass** die Schraube (22) bei 900-1000 Umdrehungen pro Minute drehbar ist und eine diskontinuierliche schraubenförmige Windung aufweist.

2. Vorrichtung nach Anspruch 1, **dadurch gekennzeichnet, dass** der Motor (24) am oberen Ende der Säule (30) angeordnet ist.

3. Vorrichtung nach einem der Ansprüche 1 oder 2, **dadurch gekennzeichnet, dass** die Schraube (22) eine Welle (26) umfasst, auf der eine Vielzahl von Lamellen oder Schaufeln (22') angeordnet ist, wobei die Welle (26) mit seinem unteren Ende von dem zylindrischen Körper (20) vorsteht, um in eine Stütze (28) einzugreifen, die mindestens ein Lager oder dergleichen aufweist.

4. Vorrichtung nach Anspruch 3, **dadurch gekennzeichnet, dass** die Stütze (28) an mindestens zwei sich horizontal erstreckenden Seitenelemente (32) ausgebildet ist, die an der Basis der Säule (30) angeordnet sind.

5. Vorrichtung nach den Ansprüchen 1 bis 4, **dadurch gekennzeichnet, dass** der Behälter (38) zum Sammeln des behandelten und verdünnten organischen Materials mindestens eine Öffnung (40) für den Auslass oder zur Entnahme des Materials selbst aufweist.

6. Vorrichtung nach einem der Ansprüche 1 bis 5, **dadurch gekennzeichnet, dass** sie einem Behälter (12) zugeordnet ist, in den das zu behandelnde organische Material vorher eingegossen und dann durch eine Schraube (14), die von einer Motorreduzierungseinheit (16) angetrieben ist, in den Ladeeinlass (18) der Säule (30) und in den zylindrischen Körper (20), der in entsprechender Weise mit einer Öffnung versehen ist, übertragen wird.

## Revendications

1. Appareil (10) permettant la sélection de matières de déchets organiques susceptibles d'être recyclées, convenant en particulier à l'élimination des résidus et corps étrangers des masses de déchets organiques humides d'origine agro-industrielle et à la séparation des aliments à l'état solide ou liquide des emballages respectifs de cartons ou matériaux équivalents, comprenant les éléments suivants :
- une colonne de traitement (30) d'orientation verticale où une vis (22) peut être mise en rotation par un moteur (24) et totalement introduite dans un corps coaxial plus ou moins cylindrique (20) pourvu d'une pluralité de petits trous au moins le long de parties de la surface latérale de celui-ci, ledit corps plus ou moins cylindrique (20) constituant une ouverture alignée avec une entrée de chargement (18) permettant l'admission du matériau organique à traiter,
- au moins un tuyau (36) dans la partie supérieure de ladite colonne (30) permettant d'éjecter les résidus ou corps étrangers présents dans la masse organique soumise au traitement, décomposée et déplacée vers le haut par ladite vis (22), et
- un ou plusieurs conduits (34) formés le long de ladite colonne (30) pour injecter l'eau de dilution ou des liquides d'autre type dans ledit corps cylindrique (20),
**caractérisé en ce que**
- un réservoir sous-jacent (38) est en communication avec ladite colonne (30) pour récupérer le matériau organique traité, et ladite vis (22) peut tourner à 900-1000 t/mn, définissant un bobinage hélicoïdal discontinu.

2. Appareil selon la revendication 1, **caractérisé en ce que** ledit moteur (24) est situé au sommet de ladite colonne (30).

3. Appareil selon l'une des revendications 1 ou 2, **caractérisé en ce que** ladite vis (22) se compose d'un arbre (26), le long duquel une pluralité de lames ou d'aubes (22') est disposé, ledit arbre (26) dépassant en bas du corps cylindrique (20) pour s'engager dans un support (28) pourvu d'un ou de plusieurs paliers ou équivalent.

4. Appareil selon la revendication 3, **caractérisé en ce que** ledit support (28) est réalisé au niveau de deux ou plusieurs éléments latéraux (32) développés horizontalement, disposés au pied de la colonne (30).

5. Appareil selon l'une des revendications 1 à 4, **caractérisé en ce que** le réservoir (38) permettant de récupérer le matériau organique traité et dilué est pourvu d'au moins une embouchure (40) pour la sortie ou le soutirage du matériau proprement dit.

6. Appareil selon l'une des revendications 1 à 5, **caractérisé en ce qu'**il est associé à un réservoir (12) où le matériau organique à traiter est versé auparavant et est ensuite transféré à travers une vis (14) actionnée par une unité motoréductrice (16), dans ladite entrée de chargement (18) de la colonne (30) et dans ledit corps cylindrique (20) pourvu d'une ouverture comme il convient.
